Europäisches Patentamt

European Patent Office

Office européen des brevets

(11) Veröffentlichungsnummer : **0 299 161 B1**

(12) **EUROPÄISCHE PATENTSCHRIFT**

(45) Veröffentlichungstag der Patentschrift :
28.08.91 Patentblatt 91/35

(21) Anmeldenummer : 88107218.5

(22) Anmeldetag : 05.05.88

(51) Int. Cl.⁵ : **B23H 1/10, B23H 7/36,**
**B23H 3/10**

(54) **Werkzeughalter für Funkenerosions-Maschinen.**

(30) Priorität : 19.05.87 DE 3716737

(43) Veröffentlichungstag der Anmeldung :
18.01.89 Patentblatt 89/03

(45) Bekanntmachung des Hinweises auf die
Patenterteilung :
28.08.91 Patentblatt 91/35

(84) Benannte Vertragsstaaten :
CH DE FR GB IT LI SE

(56) Entgegenhaltungen :
CH-A- 428 021
SOVIET INVENTIONS ILLUSTRATED, Sektion
P,Q, Woche 8747, 13. Januar 1988 DERWENT
PUBLICATIONS LTD. London, P54 &
SU-1303306 (VAGIN)

(73) Patentinhaber : Gaiser, Günter
Lindenplatz 10-1
W-7630 Lahr 19 (DE)

(72) Erfinder : Gaiser, Günter
Lindenplatz 10-1
W-7630 Lahr 19 (DE)

(74) Vertreter : Schmitt, Hans, Dipl.-Ing. et al
Patentanwälte Dipl.-Ing H. Schmitt Dipl.-Ing.
W. Maucher Dreikönigstrasse 13
W-7800 Freiburg (DE)

**Beschreibung**

Die Erfindung betrifft einen Werkzeughalter für Funkenerosions-Maschinen mit einer C-Achse zur Durchführung von Rotationsbewegungen des Werkzeuges, mit einem daran kuppelbaren Elektrodenhalter für die eigentliche Erodier-Elektrode und mit wenigstens einer Zuleitung für Spülflüssigkeit, wobei im Inneren des Elektrodenhalters ein Kanal für Spülflüssigkeit vorgesehen ist.

Derartige Werkzeughalter für Funkenerosions- oder Erodier-Maschinen sind bekannt. Durch den im Inneren des Elektrodenhalter angeordneten Kanal — in der Regel eine Zentralbohrung — kann in solchen Fällen Spülflüssigkeit unmittelbar an die Arbeitsspitze der Elektrode gebracht werden, in denen dieser Kanal bis zu der Elektrode führt und diese ebenfalls einen daran anschließbaren Durchtrittskanal hat. Dabei können allerdings nur solche Werkstücke in dieser Form auch mit Spülflüssgkeit beaufschlagt werden, bei denen die Elektrode keine geschlossene Spitze haben muß.

In den meisten Fällen ist deshalb zur Zufuhr von Spülflüssigkeit zumindest eine außenliegende Leitung vorgesehen, die je nach Werkstückform mit ihrer Mündung in unterschiedlichen Positionen auf den jeweiligen Bearbeitungspunkt der Elektrode gerichtet werden muß. Dabei sind solche Spülflüssigkeitsleitungen in der Regel mit dem Maschinenkopf verbunden bzw. gehen vom Maschinenkopf aus, welcher den Werkstückhalter trägt, so daß diese Leitungen den Verstellbewegungen des Maschinenkopfes und insoweit auch denen des Werkzeuges folgen können.

Nachteilig ist bei dieser bekannten Anordnung jedoch, daß die von der C-Achse durchzuführenden Drehbewegungen von der oder den vom Maschinenkopf kommenden Spülflüssigkeitsleitungen nicht berücksichtigt werden können, so daß entweder das Spülergebnis bei solchen Drehbewegungen verschlechtert wird oder aber eine manuelle Nachstellung der Mündungen der Leitungen erforderlich ist.

Ferner ist nachteilig, daß beim Wechsel der Elektroden und ihres Haltersmittels mechanischer Elektrodenwechsler diese äußere Leitung oder gar mehrere Leitungen hinderlich sind und vor allem wiederum nicht zu einer solchen neu angesetzten Elektrode passen, sondern manuell auf diese nun eingewechselte Elektrode angepaßt und nachgerichtet werden müssen, also den Rationalisierungseffekt des maschinellen Elektrodenwechsels weitestgehend aufheben.

Es besteht deshalb die Aufgabe, einen Werkzeughalter der eingangs erwähnten Art mit einem Elektrodenhalter zu schaffen, bei welchem eine selbsttätige Anpassung der Mündung der Spülleitung oder der Spülleitungen auf Drehbewegungen oder Wechsel des Elektrodenhalters möglich ist.

Die Lösung dieser Aufgabe besteht darin, daß der Kanal im Inneren des Elektrodenhalters zumindest eine Abzweigung und diese eine Fortsetzung als Spülleitung hat, deren Mündung seitlich der Elektrode angeordnet ist.

Somit enthält der Elektrodenhalter selbst eine oder auch mehrere Spülleitungen, die also beim Auswechseln solcher Elektrodenhalter nicht hinderlich sind und sogar mitgewechselt werden, also schon von vorneherein auch richtig eingestellt sein können, und die bei Drehbewegungen dieses jeweiligen Elektrodenhalters nicht separat nachjustiert oder nachgeführt werden müssen, sondern diese Drehbewegung automatisch mitmachen. Dadurch wird gerade bei der häufig erwünschten Drehbewegung jeweils eine optimale Spülung selbsttätig beibehalten und auch der Elektrodenwechsel mit Hilfe von Greifern und dergleichen wirklich vollständig mechanisiert.

Besonders zweckmäßig ist es dabei, wenn in der Abzweigung ein Ventil vorzugsweise in Form einer verstellbaren Düsennadel oder dergleichen zum Absperren und/oder zum Einstellen der Menge der Spülflüssigkeit vorgesehen ist. Dadurch kann die Universalität eines solchen Elektrodenhalters hinsichtlich der Spülmöglichkeiten vergrößert werden, weil die jeweilige Flüssigkeitsmenge vorgewählt eingestellt werden kann. Auch könnte ein Elektrodenhalter mit mehreren Spülleitungen dadurch an ein jeweiliges Bearbeitungsproblem angepaßt werden, daß entweder alle oder aber auch nur ein Teil der Spülleitungen wirklich geöffnet wird.

Eine besonders vorteilhafte Ausgestaltung der Erfindung kann darin bestehen, daß die Abzweigung oder die Abzweigungen zur Außenseite des Elektrodenhalters führen und dort einen Anschluß für eine insbesondere flexible Spülleitung haben. Dadurch ergeben sich zusätzliche Variationsmöglichkeiten vor allem beim ersten Einstellen einer Leitungsmündung, so daß wahlweise unterschiedliche Elektroden an dem Elektrodenhalter angeschlossen und nach entsprechender Anpassung der Spülleitung optimal gespült werden können.

Als an den Elektrodenhalter angeschlossene Leitungen können dabei Gliederleitungen oder dergleichen, die in jeder Biegestellung stehen bleiben, oder biegsame Metallröhrchen, vorzugsweise Kupferröhrchen, vorgesehen sein. Dies ergibt eine besonders schnelle Einstellung und Festlegung einer jeweiligen Leitungsmündung.

Besonders zweckmäßig kann es sein, wenn die Abzweigung oder die Abzweigungen im Inneren des Elektrodenhalters im Bereich einer Querschnitt-Erweiterung des Elektrodenhalters vorgesehen ist/sind, wobei die Verschlußnadeln oder dergleichen Ventilkörper vorzugsweise etwa radial und die Anschlüsse schräg nach außen geführt sind und an einem insbesondere schrägen Absatz der Erweiterung münden. Die radiale Anordnung der Ventilkörper erleichtert deren Einstellung mit einem entsprechend radial angesetzbaren Werkzeug, während die schräge Anordnung der eigentlichen Anschlüsse die Spülflüssigkeit schon etwa in die Richtung ablenken kann, in der sie möglichst günstig zu der Elektrode hingeführt werden kann. Wenn dabei die dies Anschlüsse aufweisende Erweiterung im Mündungsbereich der Anschlüsse ihrerseits entsprechend abgeschrägt ist, kann die Erweiterung praktisch vertikal aus diesem schrägen Absatz der Erweiterung austreten. Somit wird auch dort das Anschließen einer Gliederleitung oder eines Metallröhrchens begünstigt.

Um eine bestmögliche Anpassung an unterschiedlichste Anforderungen zu erlauben, kann es vorteilhaft sein. wenn mehrere Anschlüsse von dem inneren zentralen Kanal abgehen und vorzugsweise gleichmäßig am Umfang des Elektrodenhalters verteilt sind.

Der Anschluß an der Abzweigung an dem Elektrodenhalter kann die Form eines Innengewindes haben, in welches ein Außengewinde der Leitung einschraubbar ist.

Eine zusätzliche oder abgewandelte Lösung, die entweder in Verbindung mit der vorbeschriebenen Anordnung oder statt dieser Anordnung mit äußeren Leitungen Anwendung finden könnte, kann darin bestehen, daß die Abzweigung von dem inneren Kanal oder der Zentralbohrung innerhalb des Elektrodenhalters verläuft, sich als kanalförmige Leitung fortsetzt und stirnseitig neben der Elektrode an einem die Elektrode radial überragenden Bereich des Elektrodenhalters austritt. Ein nur in dieser Weise mit einer oder mehreren praktisch inneren Spülleitungen ausgerüsteter Elektrodenhalter wäre vor allem dann zweckmäßig, wenn er bei einer großen Serienfertigung zum Einsatz kommen soll, wo ein Nachjustieren der eigentlichen Mündung der Flüssigkeitsleitung nicht erforderlich ist, sondern diese Mündung oder Mündungen von vorneherein mit der gewünschten Richtung angeordnet sein können.

Es wäre aber auch möglich, daß an dem Austritt einer solchen kanalförmigen Leitung eine einstellbare Mündung angeschlossen ist.

Nachstehend ist die Erfindung mit ihren ihr als wesentlich zugehörenden Einzelheiten anhand der Zeichnung noch näher beschrieben.

Es zeigt in schematisierter Darstellung :

Fig. 1      eine Ansicht eines Maschinenkopfes mit C-Achse und Elektroden-Halter, wobei dieser im Längsschnitt angedeutet ist,

Fig. 2      einen Längsschnitt durch den oberen Bereich des Elektroden-Halters mit Anschlüssen für Spülflüssigkeitsleitungen an einem zentralen inneren Kanal, sowie

Fig. 3      eine abgewandelte Ausführungsform eines Elektroden-Halters.

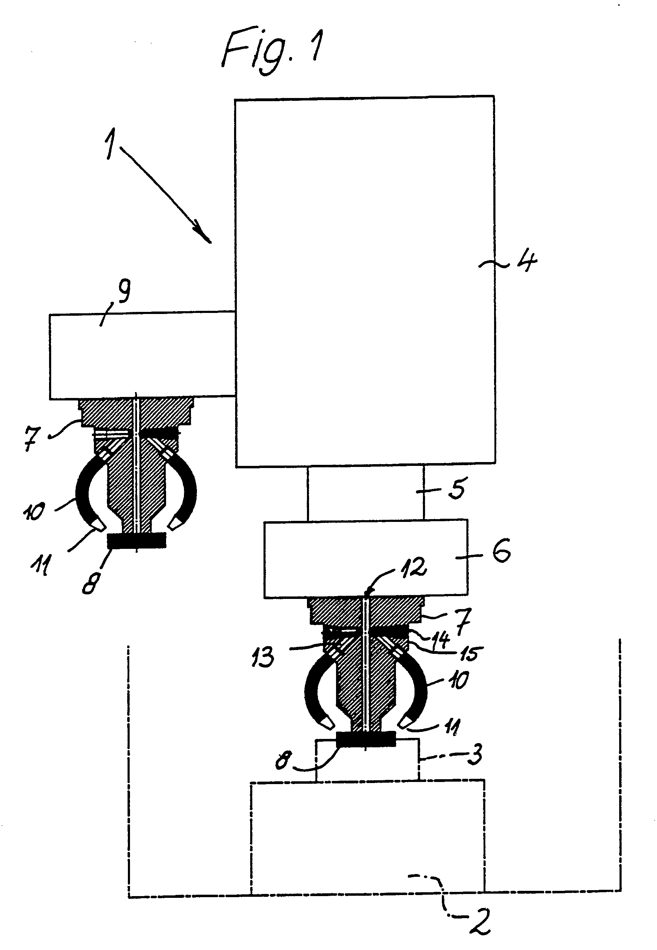

Eine im ganzen mit 1 bezeichnete Funkenerosions- oder Erodier-Maschine weist in bekannter Weise einen Maschinentisch 2 zur Aufnahme eines Werkstückes 3 und darüber einen Maschinenkopf 4 auf. An dem Maschinenkopf 4 ist über eine Pinole 5 eine C-Achse 6 angeschlossen mit welcher ein Elektroden-Halter 7 für eine als Werkzeug dienende Erodier-Elektrode 8 kuppelbar ist. In Fig. 1 ist dabei an dem Maschinenkopf 4 noch ein Werkzeugwechsler 9 angedeutet, an welchem ein weiterer Elektrodenhalter 7 erkennbar ist um anzudeuten, daß diese Elektroden-Halter 7 je nach Bedarf und Anwendung ausgewechselt werden können.

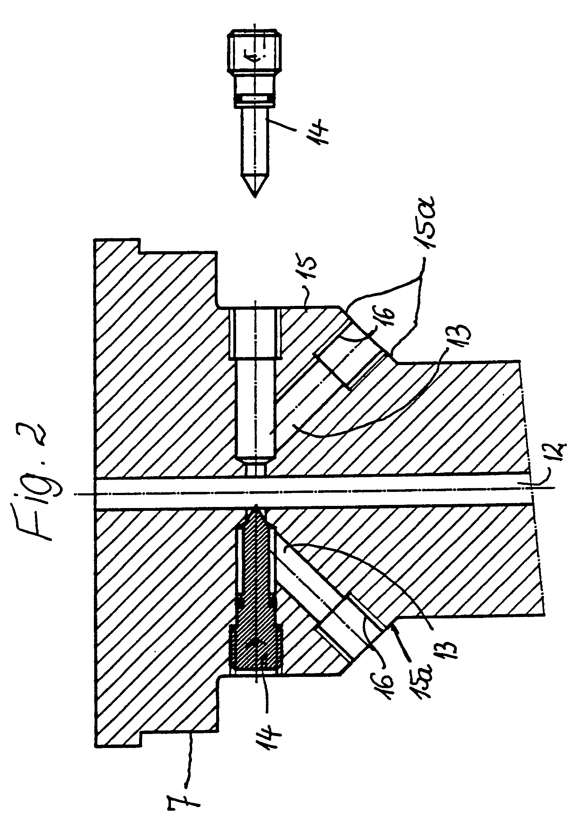

Ferner erkennt man Leitungen 10 für Spülflüssigkeit, deren Mündungen 11 auf den Arbeitsbereich der Elektrode 8 gerichtet sind. Sowohl in Fig. 1 als auch vor allem besonders gut in Fig. 2 erkennt man dabei, daß im Inneren des Elektrodenhalters 7 ein Kanal 12 für Spülflüssigkeit vorgesehen ist, der unter Umständen bis durch die Elektrode 8 hindurchgeführt sein kann.

Damit die Leitungen 10 und ihre Mündungen 11 ohne besondere Nachstellarbeiten eventuellen Drehbewegungen des Elektrodenhalters 7, die von der C-Achse 6 durchgeführt werden, folgen können, ist — wie vor allem in Fig. 2 deutlich erkennbar — an dem Kanal 12 im Inneren des Elektroden-Halters 7 eine der Zahl der Leitungen 10 entsprechende Anzahl von Abzweigungen 13 vorgesehen, deren Fortsetzung dann die Spülleitungen 10 sind. Somit können deren Mündungen 11 in erforderlicher und erwünschter Weise seitlich der eigentlichen Elektrode 8 angeordnet sein und für ein bestmögliches Spülergebnis sorgen, ohne bei Drehbewegungen manuell nachgeführt werden zu müssen. Darüber hinaus ergibt sich der Vorteil, daß beim Wechsel des Elektroden-Halters 7 mit Hilfe des Werkzeugwechslers 9 die Leitungen 10 gleich mitgewechselt werden, also wiederum nicht auf den neuen Elektroden-Halter 7 eingestellt werden müssen.

Gemäß Fig. 2 sind in den Abzweigungen 13 Ventile in Form von als Düsennadeln 14 ausgebildeten Ventilkörpern vorgesehen, die verstellbar sind und somit das Absperren oder auch das Einstellen der Menge der Spülflüssigkeit ermöglichen. Damit läßt sich der Spülvorgang an den Mündungen 11 weiter optimieren und an das jeweilige Werkstück 3 anpassen.

Im Ausführungsbeispiel führen die Abzweigungen 13 zur Außenseite des Elektroden-Halters 7 und haben dort einen Anschluß für die flexiblen Spülleitungen 10. Dabei können diese Leitungen 10 Gliederleitungen od.dgl. sein, die in jeder Biegestellung von selbst stehen bleiben, oder es können auch biegsame Metallröhrchen, z.B. Kupferröhrchen als Leitungen 10 dienen.

Gemäß Fig. 2 sind die Abzweigungen 13 im Inneren des Elektroden-Halters 7 im Bereich einer Querschnitt-Erweiterung 15 des Elektroden-Halters 7 angeordnet und vorgesehen, wobei die Ventilkörper oder Verschlußnadeln 14 und die sie aufnehmenden Bohrungen und Gewindeabschnitte etwa radial und die eigentlichen Anschlüsse 13 schräg nach außen und unten geführt sind. Dabei münden diese Anschlüsse 13 an einem entsprechend schrägen Absatz 15a der Erweiterung 15, so daß sich dort eine lokale senkrechte Mündung mit entsprechend einfacher Anschlußmöglichkeit ergibt. Im Ausführungsbeispiel gehen dabei mehrere Anschlüsse 13 von dem zentralen inneren Kanal 12 ab und sind beispielsweise gleichmäßig am Umfang des Elektroden-Halters 7 verteilt. Der Anschluß an der Abzweigung 13 am Elektroden-Halter 7 hat im Ausführungsbeispiel jeweils die Form eines Innengewindes 16, in welches ein Außengewinde der Leitung 10 einschraubbar ist. Dadurch ergibt sich eine einfache Herstellung, Montage und dichte Verbindung.

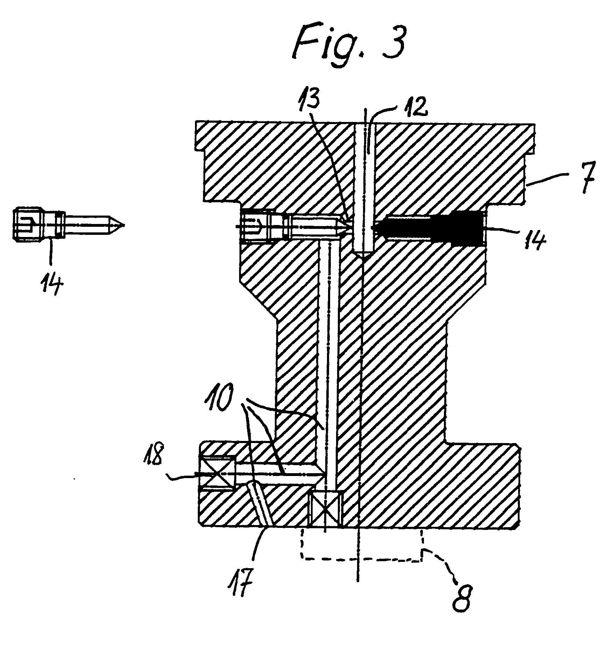

Fig. 3 zeigt eine Lösung bei der die Abzweigung 13 von dem inneren Kanal 12 vor allem bei einem Elekroden-Halter 7 größerer Außenabmessungen und größeren Querschnittes in dessen Innerem bleibt, so daß also eine oder mehrere Leitungen 10 praktisch im Inneren des Halters 7 eventuell als Bohrung oder Kanal ausgebildet ist. Dabei können solche inneren Spülleitungen stirnseitig neben der Elektrode 8 austreten und haben den Vorteil, zusammen mit dem Elektroden-Halter 7 gewechselt zu werden und dessen Drehbewegungen und sonstige Verstellbewegungen mitzumachen. Dabei ergibt sich ein festliegender Austritt 17, also nicht die Möglichkeit, die Mündung auf unterschiedliche Anforderungen hin anzupassen. Bei größeren Serienfertigungen ist jedoch eine solche wechselnde Anordnung einer Mündung der Spülleitung eventuell gar nicht erforderlich. Darüber hinaus könnte an dem Austritt eines solchen im Inneren verlaufenden Spülkanales eine einstellbare Mündung angeschlossen sein, wodurch zumindest in begrenztem Umfange auch eine Anpassung des Spülstrahles möglich ist.

Allerdings ergeben sich größere und bessere Anpaßmöglichkeiten durch flexible, weitgehend außenverlaufende Spülleitungen 10 gemäß Fig. 1, weil diese aufgrund ihrer größeren Länge auch größere Anpassungsbewegungen erlauben. Dennoch stören diese Leitungen 10 den mechanischen Elektrodenwechsel nicht, weil sie auch beim Wechsel am Elektroden-Halter 7 verbleiben können, also mitgewechselt werden. Darüber hinaus machen sie alle Bewegungen des Elektroden-Halters 7 während der Bearbeitung des Werkstückes 3 in vorteilhafter Weise mit, also auch Drehbewegungen, so daß während einer solchen Bearbeitung mit Drehbewegungen des Elektroden-Halters 7 und der Elektrode 8 immer ohne das Erfordernis einer Nachjustierung optimale Spülverhältnisse erhalten bleiben.

Es sei noch erwähnt, daß die die Leitungen 10 im Inneren des Elektroden-Halters 7 gemäß Fig. 3 bildenden Bohrungen an ihren Eintritten in den Elektroden-Halter 7 in bekannter Weise mit Stopfen 18 verschlossen sind, so daß die Spülflüssigkeit nur am Austritt 17 hervortreten kann.

## Patentansprüche

1. Werkzeughalter für Funkenerosions-Maschinen (1) mit einer C-Achse (6) zur Durchführung von Rotationsbewegungen des Werkzeuges mit einem daran kuppelbaren Elektroden-Halter (7) für die als Werkzeug dienende Erodier-Elektrode (8) und mit wenigstens einer Leitung (10) für Spülflüssigkeit, wobei im Inneren des Elektroden-Halters (7) ein Kanal (12) für Spülflüssigkeit vorgesehen ist, **dadurch gekennzeichnet,** daß der Kanal (12) im Inneren des Elektroden-Halters (7) zumindest eine Abzweigung (13) und diese eine Fortsetzung als Spülleitung (10) hat, deren Mündung (11) seitlich der Elektrode (8) angeordnet ist.

2. Maschine nach Anspruch 1, dadurch gekennzeichnet, daß in der Abzweigung (13) ein Ventil, vorzugsweise in Form einer verstellbaren Düsennadel (14) zum Absperren und/oder zum Einstellen der Menge der Spülflüssigkeit vorgesehen ist.

3. Machine nach Anspruch 1 oder 2, dadurch gekennzeichnet, daß die Abzweigung (13) oder die Abzweigungen (13) zur Außenseite des Elektroden-Halters (7) führen und dort einen Anschluß (16) für die vorzugsweise flexible Spülleitung (10) haben.

4. Maschine nach einem der Ansprüche 1 bis 3, dadurch gekennzeichnet, daß als an den Elektroden-Halter (7) angeschlossene Leitung(en) (10) Gliederleitungen, die in jeder Biegestellung stehen bleiben, oder biegsame Metallröhrchen, vorzugsweise Kupferröhrchen, vorgesehen sind.

5. Maschine nach einem der Ansprüche 1 bis 4, dadurch gekennzeichnet, daß die Abzweigung(en) (13) im Inneren des Elektroden-Halters (7) im Bereich einer Querschnitt-Erweiterung (15) des Elektroden-Halters (7) vorgesehen ist (sind), wobei die Verschlußnadel (14) od.dgl. Ventilkörper vorzugsweise etwa radial und der/die Anschlüsse (13) schräg nach außen geführt ist/sind und an einem insbesondere schrägen Absatz (15a) der Erweiterung (15) münden.

4

6. Maschine nach einem der Ansprüche 1 bis 5, dadurch gekennzeichnet, daß mehrere Anschlüsse (13) von dem inneren, vorzugsweise zentralen Kanal (12) abgehen und insbesondere gleichmäßig am Umfang des Elektrodenhalters (7) verteilt münden.

7. Maschine nach einem der Ansprüche 1 bis 6, dadurch gekennzeichnet, daß der Anschluß an der Abzweigung (13) an dem Elektroden-Halter (7) die Form eines Innengewindes (16) hat, in welches ein Außengewinde der Leitung (10) einschraubbar ist.

8. Maschine nach Anspruch 1 oder 2, dadurch gekennzeichnet, daß die Abzweigung(en) (13) von dem inneren Kanal (12) innerhalb des Elektroden-Halters (7) verläuft, sich als kanalförmige Leitung fortsetzt und stirnseitig aus dem Elektroden-Halter (7) neben der Elektrode (8) an einem die Elektrode (8) radial überragenden Bereich des Elektroden-Halters (7) austritt.

9. Maschine nach Anspruch 8, dadurch gekennzeichnet, daß an dem Austritt (17) eine einstellbare Mündung angeschlossen ist.

## Revendications

1. Porte-outil pour machines (1) à usiner par étincelage, comprenant un axe (6) en C pour assurer des mouvements rotatoires de l'outil, un porte-électrode (7) pouvant être accouplé audit axe, et destiné à l'électrode (8) d'usinage par étincelage faisant fonction d'outil, ainsi qu'au moins un conduit (10) à liquide de chasse, un canal (12) à liquide de chasse étant prévu à l'intérieur du porte-électrode (7), caractérisé par le fait que le canal (12) présente, à l'intérieur du porte-électrode (7), au moins une bifurcation (13) qui comporte un prolongement faisant office de conduit de rinçage (10), dont l'embouchure (11) se trouve sur le côté de l'électrode (8).

2. Machine selon la revendication 1, caractérisée par le fait qu'une soupape, revêtant de préférence la forme d'un pointeau injecteur réglable (14), est prévue dans la bifurcation (13) en vue de l'isolement et/ou du réglage de la quantité du liquide de chasse.

3. Machine selon la revendication 1 ou 2, caractérisée par le fait que la bifurcation (13) ou les bifurcations (13) gagne(nt) la face externe du porte-électrode (7) et comporte(nt), dans cette zone, un raccord (16) pour le conduit de rinçage (10) préférentiellement flexible.

4. Machine selon l'une des revendications 1 à 3, caractérisée par le fait que des conduits à anneaux articulés demeurant immobiles dans chaque position de flexion, ou bien de petits tubes métalliques souples, de préférence des petits tubes de cuivre, sont prévus en tant que conduit(s) (10) raccordé(s) au porte-électrode (7).

5. Machine selon l'une des revendications 1 à 4, caractérisée par le fait que la (les) bifurcation(s) (13) est (sont) prévue(s) à l'intérieur du porte-électrode (7), dans la zone d'un élargissement de section transversale (15) de ce porte-électrode (7), le pointeau obturateur (14) ou corps obturateur similaire s'étendant, de préférence, à peu près radialement vers l'extérieur, et le/les raccord(s) (13) s'étendant à l'oblique vers l'extérieur, et débouchant dans un décrochement (15a), en particulier incliné, dudit élargissement (15).

6. Machine selon l'une des revendications 1 à 5, caractérisée par le fait que plusieurs raccords (13) partent du canal interne (12), de préférence central, et débouchent notamment avec répartition uniforme sur le pourtour du porte-électrode (7).

7. Machine selon l'une des revendications 1 à 6, caractérisée par le fait que le raccord à la bifurcation (13), sur le porte-électrode (7), revêt la forme d'un filetage intérieur (16) dans lequel peut être vissé un filetage extérieur du conduit (10).

8. Machine selon la revendication 1 ou 2, caractérisée par le fait que la (les) bifurcation(s) (13) part(ent) du canal interne (12), à l'intérieur du porte-électrode (7), se prolonge(nt) en tant que conduit en forme de canal et sort(ent) frontalement du porte-électrode (7), à côté de l'électrode (8), dans une zone dudit porte-électrode (7) qui dépasse radialement de ladite électrode (8).

9. Machine selon la revendication 8, caractérisée par le fait qu'une embouchure réglable est raccordée à la sortie (17).

## Claims

1. A tool holder for spark erosion machines (1) with a C-axis (6) for performing rotational motions of the tool, including an electrode holder (7) adapted to be coupled thereto for the erosion electrode (8) serving as tool, and further including at least one duct (10) for flushing agent, a conduit (12) for flushing agent being provided in the interior of the electrode holder (7), **characterized in that** the conduit (12) in the interior of the electrode holder (7) has at least one branch (13) and the latter has an extension as a flushing agent duct (10), the orifice (11) of said duct being arranged at the side of the electrode (8).

2. A machine as claimed in claim 1, characterized in that a valve, preferably in the form of an adjustable nozzle needle (14) for shutting off and/or regulating the quantity of flushing agent, is provided in the branch (13).

3. A machine as claimed in claim 1 or claim 2, characterized in that the branch (13) or branches (13) lead to the outside of the electrode holder (7) and there have a connection (16) for the preferably flexible flushing agent duct (10).

4. A machine as claimed in any one of claims 1 to 3, characterized in that articulated ducts staying in any bending position or flexible metal tubules, preferably copper tubules, are provided as duct(s) (10) connected to the electrode holder (7).

5. A machine as claimed in any one of claims 1 to 4, characterized in that the branch(es) (13) in the interior of the electrode holder (7) is (are) provided in the region of a cross sectional enlargement (15) of the electrode holder (7), the valve needles (14) or like valve bodies preferably being directed approximately radially and the connection(s) (13) being directed outwardly at an angle and opening out at a shoulder (15a) of the enlargement (15), particularly a slanting shoulder.

6. A machine as claimed in any one of claims 1 to 5, characterized in that a plurality of connections (13) depart from the inner, preferably central conduit (12) and particularly open out in even distribution at the circumference of the electrode holder (7).

7. A machine as claimed in any one of claims 1 to 6, characterized in that the connection at the branch (13) in the electrode holder (7) has the form of an internal thread (16) into which an external thread of the duct (10) can be screwed.

8. A machine as claimed in claim 1 or claim 2, characterized in that the branch(es) (13) from the inner conduit (12) runs within the electrode holder (7), continues as a channel-like duct and emerges from the electrode holder (7) on the face next to the electrode (8) at an area of the electrode holder (7) projecting radially beyond the electrode (8).

9. A machine as claimed in claim 8, characterized in that an adjustable orifice is attached to the outlet (17).

*Fig. 1*

Fig. 2

EP 0 299 161 B1

# Fig. 3